# EUROPEAN PATENT SPECIFICATION

(11) **EP 4 407 293 B1**
(45) Date of publication and mention of the grant of the patent: **17.09.2025**
(21) Application number: 24150380.4
(22) Date of filing: 04.01.2024
(51) Int. Cl.: G01N 3/42

(54) **INSTRUMENTED INDENTATION MACHINE, PARTICULARLY FOR MICRO- AND MACRO-INDENTATION TESTS AND FOR CONVENTIONAL HARDNESS TESTS**
INSTRUMENTIERTE EINDRUCKMASCHINE, INSBESONDERE FÜR MIKRO- UND MAKRO-EINDRUCKPRÜFUNGEN UND FÜR KONVENTIONELLE HÄRTEPRÜFUNGEN
MACHINE D'INDENTATION INSTRUMENTÉE, EN PARTICULIER POUR DES TESTS DE MICRO- ET MACRO-INDENTATION ET POUR DES TESTS DE DURETÉ CLASSIQUES

(30) Priority: 25.01.2023 IT 202300001032
(43) Date of publication of application: 31.07.2024
(73) Proprietor: Axiotek S.r.l., 21056 Induno Olona (VA) (IT)
(72) Inventor: AFFRI, Davide, 21056 INDUNO OLONA VA (IT)
(74) Representative: Modiano, Micaela Nadia

(56) References cited:
- US-A1- 2004 134 263
- US-A1- 2013 125 631
- US-A1- 2013 258 094
- US-A1- 2019 187 033
- US-A1- 2020 110 013

## Description

The present invention relates to an instrumented indentation machine, particularly for micro- and macro-indentation tests and for conventional hardness tests.

An instrumented indentation machine is a machine that is capable of generating forces from 1 g to 3000 kg and of detecting the micro-displacements.

This occurs continuously and the result of these tests are load-depth curves.

By analyzing these curves at various points, it is possible to determine the complete mechanical properties of materials.

A machine of this kind can be used to perform the classic hardness tests, which are the Rockwell, Brinell, Vickers, Knoop tests.

In these measurement instruments there are major limitations which are due to the extreme range of the load forces and to the mechanical yielding of the supporting structure. US 2019/0187033 A1, US 2020/0110013 A1 and US 2004/0134263 A1 disclose known indentation machines.

The aim of the present invention consists in providing a machine capable of improving the current status of conventional instrumented indentation machines by allowing rapid changing of the tool (indenter, load cell, lens assemblies, etc.) and the ability to generate loads from extremely low loads (less than one gram) up to extremely high loads (over 3000 kilograms) while offering a high rigidity of the system, while still keeping it very compact and light at the same time, all on the same test axis.

Within this aim, an object of the present invention consists in providing an instrumented indentation machine in which the load applied is in perfect axial alignment with the indenter, thus preventing bending owing to the application of the load in a cantilevered manner and problems deriving from this.

A further object of the present invention is to provide an instrumented indentation machine that offers the widest guarantees of reliability.

Another object of the present invention consists in providing an instrumented indentation machine using materials and technologies that are per se known on the market, so as to keep down the costs of provision.

This aim and these and other objects which will become more apparent hereinafter are achieved by an instrumented indentation machine, particularly for micro- and macro-indentation tests and conventional hardness tests, comprising a main frame which defines a rigid structure having a substantially L-shaped geometric shape structure so as to define a worktop, designed to be oriented in space horizontally, and a supporting column, designed to be oriented in space vertically; said worktop being provided with a table which can move along two Cartesian axes which are perpendicular to each other and parallel to said worktop and which is adapted to support the workpiece on which a mechanical indentation or hardness test is to be performed, said supporting column being associated with means of measurement of the mechanical test to be performed on said workpiece; comprising:
- an abutment carriage which is associated with said supporting column so that it can slide along a loading direction which is substantially normal to said worktop and is associated with pusher means for generating the load necessary to perform said mechanical test; and
- a main carriage which supports the tool selected for the performance of said mechanical test, said main carriage being associated in a floating manner with said abutment carriage parallel to said loading direction in contrast to and by virtue of the action of elastic return means, so as to be drawn by said abutment carriage toward said workpiece until an indentation load is reached which is predetermined by said elastic return means and beyond which said tool receives, by virtue of engagement means, the load generated by said pusher means, said engagement means comprising a tubular body which is oriented along said loading direction and the end portion of which that is oriented toward said worktop is contoured for shape mating with the rear portion of said tool.

Further characteristics and advantages of the invention will become more apparent from the detailed description of a preferred, but not exclusive, embodiment of an instrumented indentation machine, particularly for micro- and macro-indentation tests and conventional hardness tests, illustrated by way of non-limiting example with the aid of the accompanying drawings wherein:

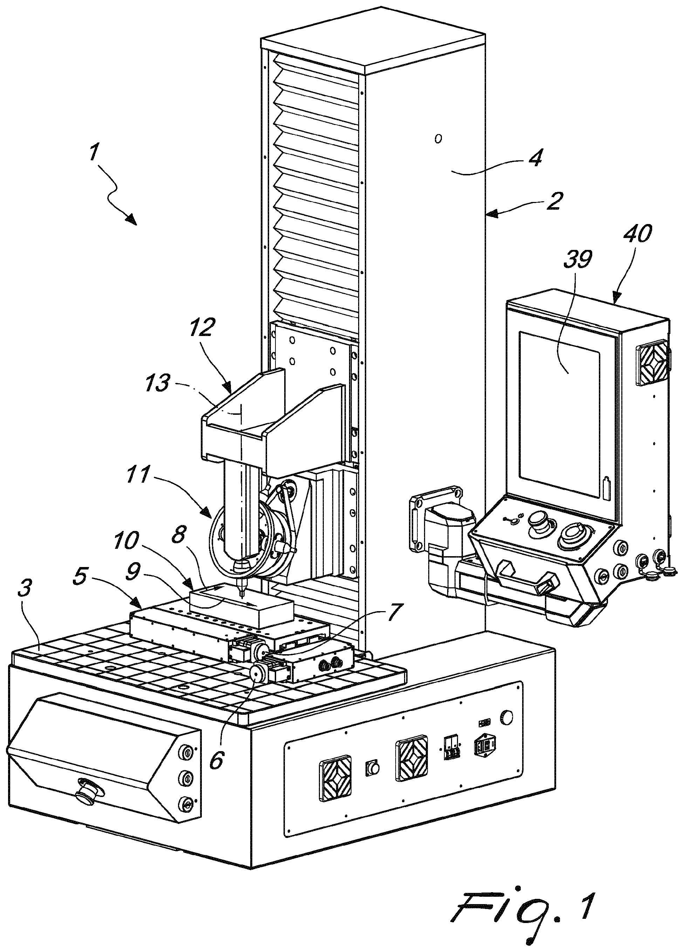

- Figure 1 is a perspective view of the instrumented indentation machine according to the present invention;

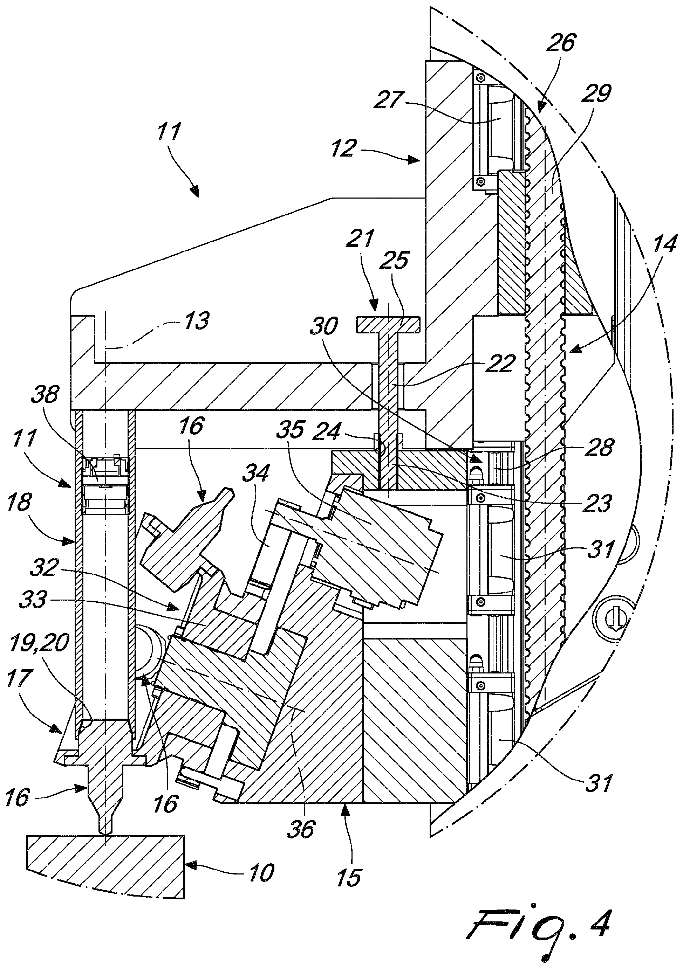

- Figures 2 to 4 are three longitudinal enlarged-scale cross-sectional views of the work region of the indentation machine shown in Figure 1 which show, in sequence, an indentation test.

With reference to the figures, an instrumented indentation machine, particularly for micro- and macro-indentation tests and conventional hardness tests, generally designated by the reference numeral 1, comprises a main frame 2 which defines a rigid structure having a substantially L-shaped geometric shape structure so as to define a worktop 3, designed to be oriented in space horizontally, and a supporting column 4, designed to be oriented in space vertically.

In more detail, the worktop 3 is provided with a table 5 which can be moved, for example by means of two graduated adjusters 6 and 7 which are actuated manually or motorized, along two Cartesian axes 8 and 9 which are perpendicular to each other and parallel to the worktop 3, and which is adapted to support the workpiece 10 on which a mechanical indentation or hardness test is to be performed.

With regard to the supporting column 2, this is associated with means of measurement 11 of the mechanical test to be performed on the workpiece 10.

According to the invention, the instrumented indentation machine 1 comprises:
- an abutment carriage 12 which is associated with the supporting column 4 so that it can slide along a loading direction 13 which is substantially normal to the worktop 3 and is associated with pusher means 14 for generating the load necessary to perform the mechanical test; and
- a main carriage 15 which supports the tool 16 selected for the performance of the mechanical test.

Advantageously, the main carriage 15 is associated in a floating manner with the abutment carriage 12 parallel to the loading direction 13 in contrast to and by virtue of the action of elastic return means, not shown for the sake of graphic simplicity, so as to be drawn by the abutment carriage 12 toward the workpiece 10 until an indentation load is reached which is predetermined by the elastic return means and beyond which the tool 16 receives, by virtue of engagement means 17, the load generated by the pusher means 14.

In more detail, the engagement means 17 comprise a tubular body 18 which is oriented along the loading direction 13 and the end portion of which that is oriented toward the worktop 3 is contoured for shape mating with the rear portion of the tool 16.

In the embodiment shown, the shape mating comprises a frustum-shaped mating constituted by a flared surface 19 defined by one of either the end portion of the tubular body 18 or the rear portion of the tool 16 and by a frustum-shaped surface 20 defined by the other one of either the end portion of the tubular body 18 or the rear portion of the tool 16.

Conveniently, such surfaces 19 and 20 have an axis of revolution which coincides with the loading direction 13.

Advantageously, there is a retention element 21, shaped substantially like a flat-head screw, which is adapted to maintain the main carriage 15 in suspension with respect to the abutment carriage 12 until the predefined indentation load is reached.

In more detail, such retention element 21 has a central portion 22 which passes through the abutment carriage 12, one end segment 23 screwed into a respective threaded hole 24 of the main carriage 15 and the other end segment 25 radially enlarged with respect to the through hole defined by the abutment carriage 12 in such a way as to rest on the latter so as to cause the main carriage 15 to be suspended.

With regard to the movement of the two carriages 12 and 15, the abutment carriage 12 is associated so that it can slide with the supporting column 4 by means of first linear guiding means 26, constituted by a first skid 27 and a linear guide 28, and can move along these by means of a screw-and-nut kinematic system 29 of the motorized type or driven manually by a handwheel, and the main carriage 15 is associated so that it can slide with the supporting column 4 by means of second linear guiding means 30, constituted by the linear guide 28 and a second skid 31.

Advantageously, the main carriage 15 comprises a tool-holding device 32 provided with a plurality of tools 16 which can be selectively selected and placed at the engagement means 17 so as to be able to perform a plurality of mechanical tests of different types.

In the proposed embodiment, such tool-holding device 32 comprises a motorized carousel 33, driven by a belt transmission 34 and an electric motor 35, having an axis 36 which is oblique with respect to the loading direction 13 so as to selectively place one of the tools 16 at the loading direction 13 to apply the load generated by the pusher means 14 directly to the selected tool 16.

In a variation, not shown, such tool-holding device 32 can be provided by a linear bar on which the individual tools 16 are provided.

To complete the instrumented indentation machine 1, the means of measurement 11, adapted to measure the imprint left by the tool 16 on the workpiece 10, and which are accommodated in the tubular body 18, comprise a digital video camera 38 which is functionally associated with a monitor 39 for the computerized display of the imprint.

Finally, as a consequence of what just described there can be an electronic control and management unit 40, on board the machine, for the automated management of the instrumented indentation machine 1.

The operation of the instrumented indentation machine 1 is described below.

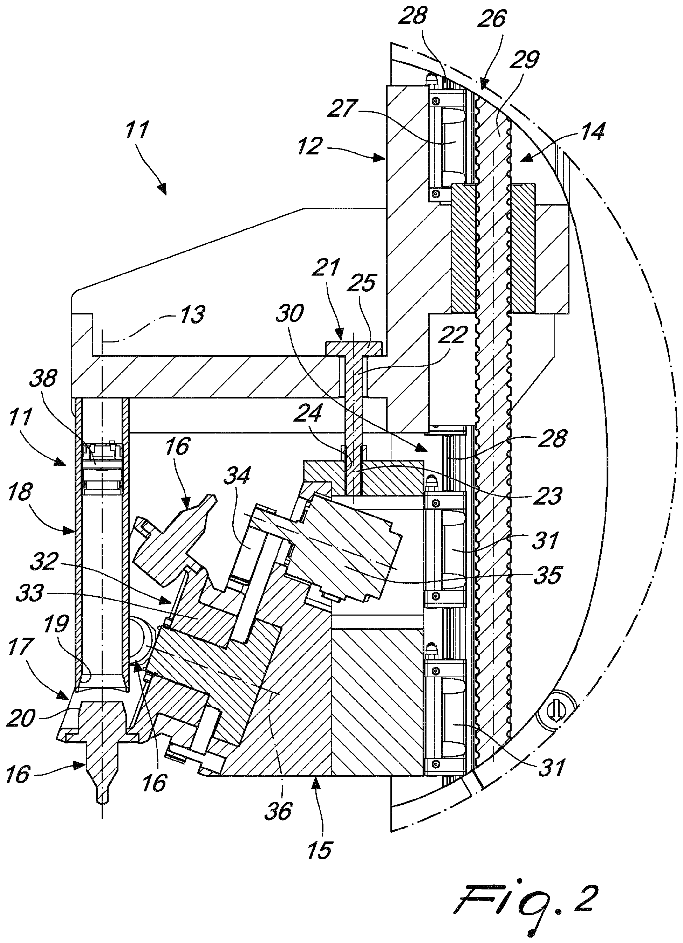

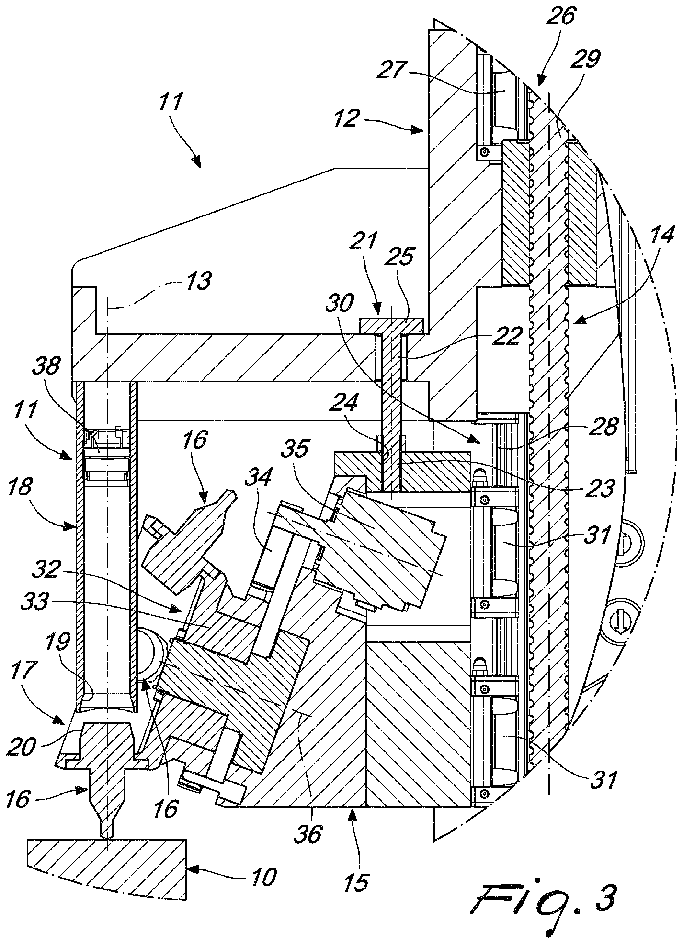

With reference to Figures 2 and 3, the abutment carriage 12 is moved toward the workpiece 10, pulling the main carriage 15 with it, until the mounted tool 16 reaches the workpiece 10 and rests thereon, as shown in Figure 3.

By virtue of the calculated play defined between the engagement means 17, the main carriage 15 will remain in a condition of suspension, thus making it possible to generate the low loads required, for example, by the Vickers tests.

Proceeding with its travel, the abutment carriage 12 continues its downward movement until the main carriage 15 reaches a certain force calculated in advance, which is when the abutment carriage 12, via the coupling of the engagement means 17, will secure the tool 16 in line along the loading direction 13, so favoring and ensuring the maintenance and precision of the position with the possibility of generating a higher force without stressing the tool-holding device 32.

In practice it has been found that the instrumented indentation machine described achieves the intended aim and objects, by making it possible, by virtue of the two separate and interconnected carriages moved and controlled by an electric axis, as well as the tool-holding device 32, to perform various different mechanical tests with a wide range of applicable loads.

In fact, under certain conditions, when it is desired to perform a micro-indentation test, the abutment carriage pulls the main carriage against the action of the elastic return means until the predefined indentation load is reached.

Differently, when it is desired to perform a macro-indentation test, the two carriages become a single and integral element so as to prevent deformations that would be irreparable on the main carriage which accommodates the tool-holding device.

The instrumented indentation machine, particularly for micro- and macro-indentation tests and conventional hardness tests, thus conceived is susceptible of numerous modifications and variations all of which are within the scope of the appended claims.

Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An instrumented indentation machine (1), particularly for micro- and macro-indentation tests and conventional hardness tests, comprising a main frame (2) which defines a rigid structure having a substantially L-shaped geometric shape structure so as to define a worktop (3), designed to be oriented in space horizontally, and a supporting column (4), designed to be oriented in space vertically; said worktop (3) being provided with a table (5) which can move along two Cartesian axes (8, 9) which are perpendicular to each other and parallel to said worktop (3) and which is adapted to support the workpiece (10) on which a mechanical indentation or hardness test is to be performed, said supporting column (4) being associated with means of measurement (11) of the mechanical test to be performed on said workpiece (10); comprising:
- an abutment carriage (12) which is associated with said supporting column (4) so that it can slide along a loading direction (13) which is substantially normal to said worktop (3) and is associated with pusher means (14) for generating the load necessary to perform said mechanical test; and
- a main carriage (15) which supports the tool (16) selected for the performance of said mechanical test, said main carriage (15) being associated in a floating manner with said abutment carriage (12) parallel to said loading direction (13) in contrast to and by virtue of the action of elastic return means, so as to be drawn by said abutment carriage (12) toward said workpiece (10) until an indentation load is reached which is predetermined by said elastic return means and beyond which said tool (16) receives, by virtue of engagement means (17), the load generated by said pusher means (14), said engagement means (17) comprising a tubular body (18) which is oriented along said loading direction (13) and the end portion of which that is oriented toward said worktop (3) is contoured for shape mating with the rear portion of said tool (16).

2. The instrumented indentation machine (1) according to claim 1, **characterized in that** said main carriage (15) comprises a tool-holding device (32) provided with a plurality of tools (16) which can be selectively selected and placed at said engagement means (17) so as to be able to perform a plurality of mechanical tests of different types.

3. The instrumented indentation machine (1) according to claim 2, **characterized in that** said tool-holding device (32) comprises a motorized carousel (33) having an axis (36) which is oblique with respect to said loading direction (13) so as to selectively place one of said tools (16) at said loading direction (13) to apply the load generated by said pusher means (14) directly to said selected tool (16).

4. The instrumented indentation machine (1) according to claim 1, **characterized in that** said shape mating comprises a frustum-shaped mating constituted by a flared surface (19) defined by one of either said end portion or said rear portion and by a frustum-shaped surface (20) defined by the other one of either said end portion or said rear portion; said surfaces (19, 20) having an axis of revolution that coincides with said loading direction (13).

5. The instrumented indentation machine (1) according to one or more of the preceding claims, **characterized in that** it comprises a retention element (21) adapted to keep said main carriage (15) in suspension with respect to said abutment carriage (12) until said predetermined indentation load is reached.

6. The instrumented indentation machine (1) according to one or more of the preceding claims, **characterized in that** said abutment carriage (12) is associated so that it can slide with said supporting column (4) by virtue of first linear guiding means (26) and is movable along them by means of a screw-and-nut kinematic system (29).

7. The instrumented indentation machine (1) according to one or more of the preceding claims, **characterized in that** said main carriage (15) is associated so that it can slide with said supporting column (4) by means of second linear guiding means (30).

8. The instrumented indentation machine (1) according to one or more of the preceding claims, **characterized in that** it comprises means of measurement (11), adapted to measure the imprint left by said tool (16) on said workpiece (10), which are accommodated in said tubular body (18) and comprise a digital video camera (38), and **in that** it comprises a monitor (39) which is functionally associated with said digital video camera (38) for the computerized display of said imprint.

9. The instrumented indentation machine (1) according to one or more of the preceding claims, **characterized in that** it comprises an electronic control and management unit (40) for the automated management of said instrumented indentation machine (1).

## Patentansprüche

1. Eine mit Instrumenten versehene Eindruckmaschine (1), insbesondere für Mikro- und Makro-Eindruckprüfungen und konventionelle Härteprüfungen, die einen Hauptrahmen (2) umfasst, welcher eine starre Struktur mit einer im Wesentlichen L-förmigen geometrischen Form bestimmt, um eine Arbeitsoberfläche (3) zu bestimmen, konstruiert, um im Raum horizontal ausgerichtet zu werden, und eine tragende Säule (4), konstruiert, um im Raum vertikal ausgerichtet zu werden; wobei die Arbeitsoberfläche (3) mit einem Tisch (5) ausgestattet ist, der sich entlang zweier kartesischer Achsen (8, 9) bewegen kann, die senkrecht zueinander und parallel zu der Arbeitsoberfläche (3) sind; und der ausgebildet ist, um das Werkstück (10) zu tragen, an dem eine mechanische Eindruck- oder Härteprüfung durchgeführt werden soll; wobei die tragende Säule (4) mit Messungsmitteln (11) des mechanischen Tests verbunden ist, der an dem Werkstück (10) durchgeführt werden soll; Folgendes umfassend:
- einen Widerlagerschlitten (12), der so mit der tragenden Säule (4) verbunden ist, dass er in einer Belastungsrichtung (13) gleiten kann, die im Wesentlichen senkrecht zu der Arbeitsoberfläche (3) ist, und mit Schiebermitteln (14) zum Erzeugen der Last verbunden ist, die zur Durchführung der mechanischen Prüfung erforderlich ist; und
- einen Hauptschlitten (15), der das zur Durchführung der mechanischen Prüfung ausgewählte Werkzeug (16) trägt; wobei der Hauptschlitten (15) frei schwebend mit dem Widerlagerschlitten (12) parallel zu der Belastungsrichtung (13) im Kontrast zu und durch die Wirkung elastischer Rückstellmittel verbunden ist, um so von dem Widerlagerschlitten (12) zu dem Werkstück (10) hin gezogen zu werden, bis eine Eindrucklast erreicht ist, welche von den elastischen Rückstellmitteln vorbestimmt ist und jenseits derer das Werkzeug (16), über Eingriffsmittel (17), die von den Schiebermitteln (14) erzeugte Last empfängt; wobei die Eingriffsmittel (17) einen rohrförmigen Körper (18) umfassen, der in der Belastungsrichtung (13) ausgerichtet ist und dessen zu der Arbeitsoberfläche (3) hin ausgerichteter Endabschnitt zur Formpassung mit dem hinteren Abschnitt des Werkzeugs (16) ausgebildet ist.

2. Die mit Instrumenten versehene Eindruckmaschine (1) gemäß Anspruch 1, **dadurch gekennzeichnet, dass** der Hauptschlitten (15) eine Werkzeughaltervorrichtung (32) umfasst, ausgestattet mit einer Vielzahl von Werkzeugen (16), die ausgewählt und an den Eingriffsmitteln (17) positioniert werden können, um eine Vielzahl mechanischer Prüfungen verschiedener Art durchführen zu können.

3. Die mit Instrumenten versehene Eindruckmaschine (1) gemäß Anspruch 2, **dadurch gekennzeichnet, dass** die Werkzeughaltervorrichtung (32) ein motorisiertes Karussell (33) mit einer Achse (36) umfasst, die schräg zu der Belastungsrichtung (13) ist, um eines der Werkzeuge (16) selektiv an der Belastungsrichtung (13) zu positionieren, um die von den Schiebermitteln (14) erzeugte Last direkt auf das ausgewählte Werkzeug (16) einwirken zu lassen.

4. Die mit Instrumenten versehene Eindruckmaschine (1) gemäß Anspruch 1, **dadurch gekennzeichnet, dass** die Formpassung eine stumpfförmige Passung umfasst, bestehend aus einer konisch erweiterten Oberfläche (19), die entweder von dem Endabschnitt oder von dem hinteren Abschnitt bestimmt wird, und aus einer stumpfförmigen Oberfläche (20), die von dem jeweils anderen des Endabschnitts oder des hinteren Abschnitts bestimmt wird; wobei die Oberflächen (19, 20) eine Drehachse haben, die mit der Belastungsrichtung (13) zusammenfällt.

5. Die mit Instrumenten versehene Eindruckmaschine (1) gemäß einem oder mehreren der obigen Ansprüche, **dadurch gekennzeichnet, dass** sie ein Halteelement (21) umfasst, ausgebildet, um den Hauptschlitten (15) in der Aufhängung mit Bezug auf den Widerlagerschlitten (12) zu halten, bis die vorbestimmte Eindrucklast erreicht ist.

6. Die mit Instrumenten versehene Eindruckmaschine (1) gemäß einem oder mehreren der obigen Ansprüche, **dadurch gekennzeichnet, dass** der Widerlagerschlitten (12) über erste lineare Führungsmittel (26) verschiebbar mit der tragenden Säule (4) verbunden und entlang denselben mit Hilfe eines kinematischen Spindel-Muttersystems (29) beweglich ist.

7. Die mit Instrumenten versehene Eindruckmaschine (1) gemäß einem oder mehreren der obigen Ansprüche, **dadurch gekennzeichnet, dass** der Hauptschlitten (15) über zweite lineare Führungsmittel (30) verschiebbar mit der tragenden Säule (4) verbunden ist.

8. Die mit Instrumenten versehene Eindruckmaschine (1) gemäß einem oder mehreren der obigen Ansprüche, **dadurch gekennzeichnet, dass** sie Messungsmittel (11) umfasst, ausgebildet, um den Abdruck, der von dem Werkzeug (16) auf dem Werkstück (10) hinterlassen wird, zu messen, welche in dem rohrförmigen Körper (18) untergebracht sind und eine digitale Videokamera (38) umfassen; und dadurch, dass sie einen Monitor (39) umfasst, der für die computerisierte Anzeige des Abdrucks funktionell mit der digitalen Videokamera (38) verknüpft ist.

9. Die mit Instrumenten versehene Eindruckmaschine (1) gemäß einem oder mehreren der obigen Ansprüche, **dadurch gekennzeichnet, dass** sie eine elektronische Steuerungs- und Verwaltungseinheit (40) zur automatisierten Verwaltung der mit Instrumenten versehenen Eindruckmaschine (1) umfasst.

## Revendications

1. Machine d'indentation instrumentée (1), en particulier pour des tests de micro- et macro-indentation et pour des tests de dureté classiques, comprenant un châssis principal (2) qui définit une structure rigide ayant une forme géométrique sensiblement en L de manière à définir un plan de travail (3), conçu pour être orienté horizontalement dans l'espace, et une colonne de support (4), conçue pour être orientée verticalement dans l'espace ; ledit plan de travail (3) étant muni d'une table (5) pouvant se déplacer selon deux axes cartésiens (8, 9) qui sont perpendiculaires entre eux et parallèles audit plan de travail (3) et qui est adaptée pour supporter la pièce (10) sur laquelle doit être effectué un test d'indentation mécanique ou de dureté, ladite colonne de support (4) étant associée à des moyens de mesure (11) du test mécanique à effectuer sur ladite pièce (10) ; comprenant :
- un chariot de butée (12) qui est associé à ladite colonne de support (4) de manière à pouvoir coulisser selon une direction de chargement (13) sensiblement normale audit plan de travail (3) et qui est associé à des moyens de poussée (14) pour générer la charge nécessaire pour effectuer ledit test mécanique; et
- un chariot principal (15) qui supporte l'outil (16) sélectionné pour la réalisation dudit test mécanique, ledit chariot principal (15) étant associé de manière flottante audit chariot de butée (12) parallèlement à ladite direction de chargement (13) contrairement à et grâce à l'action de moyens de retour élastiques, de manière à être tiré par ledit chariot de butée (12) vers ladite pièce à usiner (10) jusqu'à ce qu'une charge d'indentation soit atteinte, laquelle est prédéterminée par lesdits moyens de retour élastiques et au-delà de laquelle ledit outil (16) reçoit, grâce à des moyens d'engagement (17), la charge générée par lesdits moyens de poussée (14), lesdits moyens d'engagement (17) comprenant un corps tubulaire (18) qui est orienté le long de ladite direction de chargement (13) et dont la partie d'extrémité orientée vers ledit plan de travail (3) est profilée pour s'adapter à la forme de la partie arrière dudit outil (16).

2. Machine d'indentation instrumentée (1) selon la revendication 1, **caractérisée en ce que** ledit chariot principal (15) comprend un dispositif de maintien d'outils (32) muni d'une pluralité d'outils (16) qui peuvent être sélectionnés de manière sélective et placés au niveau desdits moyens d'engagement (17) de manière à pouvoir effectuer une pluralité de tests mécaniques de différents types.

3. Machine d'indentation instrumentée (1) selon la revendication 2, **caractérisée en ce que** ledit dispositif de maintien d'outils (32) comprend un carrousel motorisé (33) ayant un axe (36) qui est oblique par rapport à ladite direction de chargement (13) de manière à placer sélectivement l'un desdits outils (16) dans ladite direction de chargement (13) afin d'appliquer la charge générée par lesdits moyens de poussée (14) directement sur ledit outil sélectionné (16).

4. Machine d'indentation instrumentée (1) selon la revendication 1, **caractérisée en ce que** ledit accouplement de forme comprend un accouplement tronconique constitué par une surface évasée (19) définie par l'une desdites parties d'extrémité ou desdites parties arrière et par une surface tronconique (20) définie par l'autre desdites parties d'extrémité ou desdites parties arrière ; lesdites surfaces (19, 20) ayant un axe de rotation qui coïncide avec ladite direction de chargement (13).

5. Machine d'indentation instrumentée (1) selon une ou plusieurs des revendications précédentes, **caractérisée en ce qu'**elle comprend un élément de retenue (21) adapté pour maintenir ledit chariot principal (15) en suspension par rapport audit chariot de butée (12) jusqu'à ce que ladite charge d'indentation prédéterminée soit atteinte.

6. Machine d'indentation instrumentée (1) selon une ou plusieurs des revendications précédentes, **caractérisée en ce que** ledit chariot de butée (12) est associé de manière à pouvoir coulisser avec ladite colonne de support (4) grâce à des premiers moyens de guidage linéaire (26) et est mobile le long de ceux-ci au moyen d'un système cinématique à vis et coulisse (29).

7. Machine d'indentation instrumentée (1) selon une ou plusieurs des revendications précédentes, **caractérisée en ce que** ledit chariot principal (15) est associé de manière à pouvoir coulisser avec ladite colonne de support (4) au moyen de seconds moyens de guidage linéaire (30).

8. Machine d'indentation instrumentée (1) selon une ou plusieurs des revendications précédentes, **caractérisée en ce qu'**elle comprend des moyens de mesure (11), adaptés pour mesurer l'empreinte laissée par ledit outil (16) sur ladite pièce à usiner (10), qui sont logés dans ledit corps tubulaire (18) et comprennent une caméra vidéo numérique (38), et **en ce qu'**elle comprend un moniteur (39) qui est associé fonctionnellement à ladite caméra vidéo numérique (38) pour l'affichage informatisé de ladite empreinte.

9. Machine d'indentation instrumentée (1) selon une ou plusieurs des revendications précédentes, **caractérisée en ce qu'**elle comprend une unité électronique de commande et de gestion (40) pour la gestion automatisée de ladite machine d'indentation instrumentée (1).
